# EUROPEAN PATENT APPLICATION

(11) **EP 0 995 494 A2**
(43) Date of publication of application: **26.04.2000**
(21) Application number: 99307528.2
(22) Date of filing: 23.09.1999
(51) Int. Cl.: B03C 3/06

(54) **An electrostatic air filtering device**

(30) Priority: 25.09.1998 MY 9804410
(71) Applicant: Golden Showcase Intellectual Properties Sdn Bhd, Pandan Indah, 55100 Kuala Lumpur (MY)
(72) Inventor: Wong, Peng Kuen, 68100 Selayang, Selangor (MY)
(74) Representative: Waldren, Robin Michael

(57) **Abstract**

An air filtering device in the form of an electrostatic precipitator (50) comprises an array of a plurality of electrically charged plates (51, 52, 53) spaced apart to allow flow of air through the array. The array of plates comprises a plurality of cylindrically shaped plates (51, 52, 53) of differing diameters positioned in a coaxial array about a central discharge rod (55).

## Description

### FIELD OF THE INVENTION

This invention relates to an air filtering device for use in a wide range of applications to clean and filter air both in indoor or outdoor environments.

### BACKGROUND OF THE INVENTION

As the world approaches the 21^{st} Century pollution looms as a serious threat to the fine balance between the environment and human habitation. Air pollution is a particular problem that is acute in major cities of the world.

These days there are many devices that clean or filter air, and these include cyclones that are effective to remove large particles of pollutants, electrostatic precipitators that operate more satisfactorily on small particles, liquid scrubbers and air purifiers that use ionisers.

However all the above devices have drawbacks and limitations such as the cyclones being unable to remove small pollutant particles (less than 5µ) and electrostatic precipitators having limitation on air flow. Scrubbers are usually costly to run and produce polluted water streams. Air purifiers are very costly and require frequent maintenance.

It is these problems with existing air filtering or air cleaning devices that have brought about the present invention.

### SUMMARY OF THE INVENTION

According to a first aspect of the invention there is provided an air filtering device in the form of an electrostatic precipitator 50 comprising at least one electrically charged plate spaced apart from a central discharge rod 55 to allow flow of air therebetween, characterised in that the at least one plate is a cylindrically shaped plate positioned in a coaxial arrangement about the central discharge rod 55.

According to a further aspect of the present invention there is provided an air filtering device comprising a frusto conical cyclone chamber having a large end and a small end, an in-feed positioned adjacent the large end to promote tangential in feed of unfiltered air, a collector being positioned at the small end and an air outlet being positioned at the large end of the cyclone characterised in that the air outlet includes an electrostatic precipitator through which the air passes to exit.

Preferably the electrostatic precipitator comprises a plurality of electrically charged coaxial cylindrical walls.

### DESCRIPTION OF THE DRAWINGS

An embodiment of the present invention will now be described by way of example only with reference to the accompanying drawings in which:
Figure 1 is a cross sectional view of an air filtering device embodying an embodiment of the invention,
Figure 2 is a perspective view of an electrostatic precipitator used in the air filtering device shown in Figure 1, and
Figure 3 is a plan view of the precipitator.

### DESCRIPTION OF THE PREFERRED EMBODIMENT

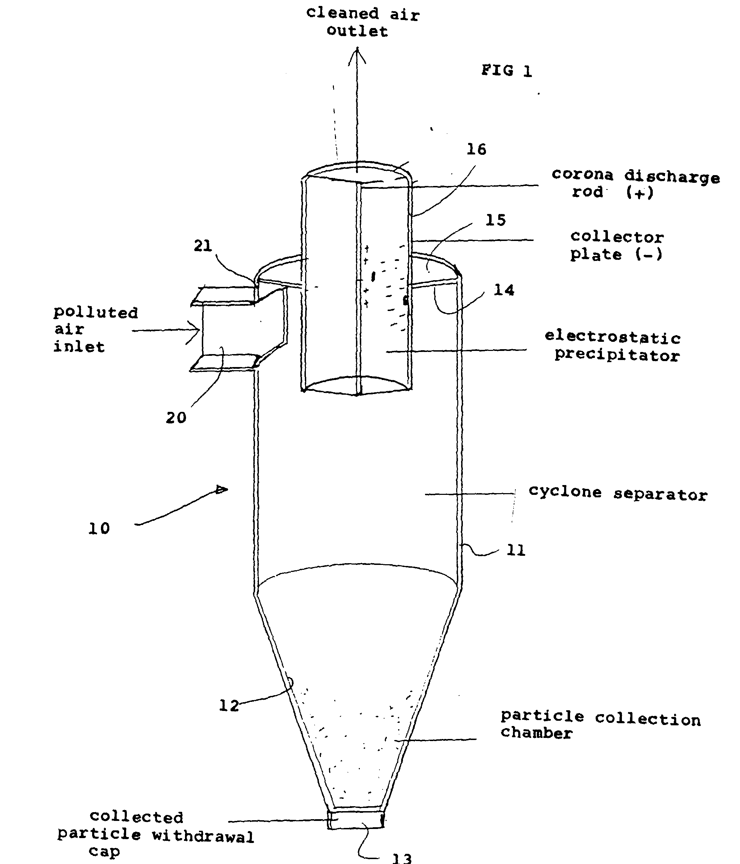

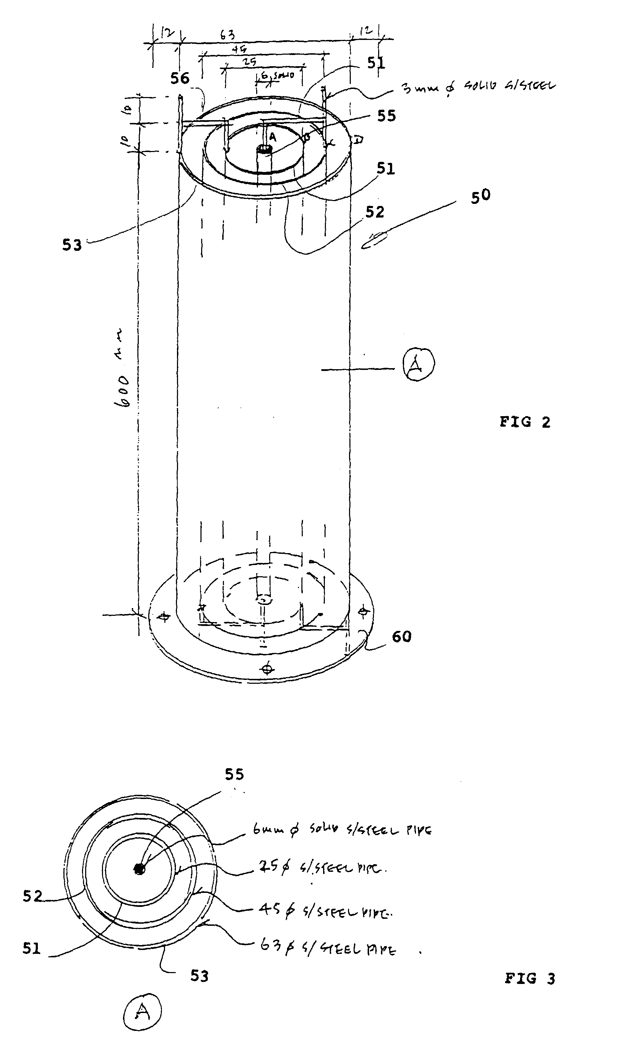

The air filtering device 10 illustrated in Figures 1 and 2 comprises a substantially cylindrical body supported to have its longitudinal axis vertical. The body 11 includes a cylindrical cyclone separator that merges into a frusto-conical end 12 that terminates in a collector 13. The upper end 14 of the cylindrical body 11 has a closed end face 15 that supports a cylindrical air outlet 16 positioned coaxially of the body 11.

A tangentially inclined air inlet 20 is positioned in the wall 21 of the cyclone adjacent the end face 15 and is arranged to allow polluted air to be tangentially forced into the interior of the cyclone separator. The cyclone separator is fabricated in steel or other conducting material and the collector 13 at the tapered end of the frusto-conical end 12 is removable so that particulate material that collects at the bottom of the device 10 can be removed for cleaning purposes. The air outlet 16 is, as shown in Figure 1, of cylindrical cross section but essentially comprises at least one spaced coaxial cylindrical plate that extends along the length of the outlet 16. In a preferred embodiment a plurality of equally spaced coaxial cylindrical plates extend along the length of the outlet 16 to act as a multi plated electrostatic precipitator 50 shown in Figures 2 and 3.

As shown in Figures 2 and 3, the electrostatic precipitator 50 comprises three stainless steel, or other conducting material, cylinders 51, 52, 53 of differing diameters that can be mounted coaxially so there is a uniform gap between each cylinder as shown in Figure 2. A cylindrical rod 55 extends up the centre of the device. The rod 55 is of solid stainless steel or other conducting material and operates as the corona discharge rod. The cylinders 51, 52, 53 are held together by 3mm diameter solid steel, or other conducting material, ties 56, 57 that are welded to the top and bottom of each cylinder to hold the cylinders in place in the configuration shown in Figure 1. The ties 56, 57 also serve as means to facilitate connection to a source of electricity so that a high voltage potential can be placed across the cylinders. In a preferred embodiment, the larger steel, or other conducting material, cylinders 53 is 63mm in diameter, the second largest 52 is 45mm and the smallest cylinder 51 25mm with the central discharge rod 55 being 6mm in diameter. The radius of the device 50 from the corona discharge rod 55 is 31.5mm. The assembly is 600mm in length. The corona rod 55 and second cylinder 52 are electrically connected as positive charge whilst the first 51 and third cylinder 53 are electrically connected as negative charge.

In the case where there is only one cylinder mounted coaxially with the corona rod 55, the corona rod 55 is electrically connected as positive charge and the single cylinder is electrically connected as negative charge so as to set up an electrostatic field.

In conventional electrostatic precipitators, to produce an electrostatic field between the positively and negatively charged plates, the voltage required is 4kV/cm. Hence, for an electrostatic precipitator having a distance of 3cm between the positive and negative charges, the voltage required is 12kV. For the same distance of 3cm, the preferred embodiment of the present invention has three layers of co-axial cylinders. This results in the distance between charges being only 1cm and therefore requiring a voltage of only 4kV rather than 12kV.

It is understood that the number of layers would vary to suit the application, the more layers the lower is the voltage required to maintain the same efficiency as conventional electrostatic precipitators.

The electrostatic precipitator illustrated in Figures 1 and 2 is arranged so that the plates do not block the passage of air exiting the air cleaning device. However, the number of plates provide adequate surface area contact with the electrostatically charged particles so that the smaller pollutant particles can be propelled to attach against the cylindrical walls of the precipitator.

The device works by polluted air travelling into the device through the air inlet to be propelled tangentially around the cyclone body and the larger particles greater than 5µ are then separated to be collected in the base of the collector in the removable cap. The remaining air with the smaller particles is projected upwardly to past through the outlet which as described is a multi-plated electrostatic precipitator. The electrostatic precipitator has the effect of entrapping the smaller particles less than 5µ so that the exeunt air is free of pollutants. The combination of the cyclone and electrostatic precipitator means that the polluted air is in the device for longer and travels a greater distance than in conventional filtration systems and therefore the filtration process is more efficient. The device minimises the size of the filtering apparatus whilst providing maximum efficiency and is able to effectively filter polluted air that includes both large and small particles. The multi-plated electrostatic precipitator also allows the device to operate on lower voltage than would normally be the case with more conventional precipitators.

It is understood that the size and dimensions and number of plates in the device would vary depending on the environment in which the air cleaning device is utilised. The smaller particles that are collected on the walls of the electrostatic precipitator tend over time to attach to each other to form larger agglomerates that then slide down by gravity to be collected in a dust withdrawal cap in the base of the cyclone. The device requires minimum maintenance, has cheap replacement costs and is designed so that there is no blockage of air flow to operate efficiently as an air cleaning device with efficient use of the power.

The device described above or variations and alterations of the device can be effectively used in a whole range of environments such as within automobiles and particularly within vertical exhaust pipes such is found in trucks and lorries, within outdoor air-conditioning compressors, attached to street lamps, in outdoor open spaces, in public areas such as bus stations and railway stations, in sports complexes, hospitals, government buildings, shopping complexes, schools and any public area where many people congregate and air pollution is a problem. The device may be incorporated with or without cyclones for gas disposal systems in, for example, a factory chimney, or it may be combined with other filtration systems such as scrubbers or the like. The device may also be designed to be used indoors in both private and public spaces from the private homes to large office blocks or environments where air pollution is a particular problem such as pubs, amusement centres, discotheques, nightclubs and restaurants.

## Claims

1. An air filtering device in the form of an electrostatic precipitator (50) comprising at least one electrically charged plate spaced apart from a central discharge rod (55) to allow flow of air therebetween, characterised in that the at least one plate is a cylindrically shaped plate positioned in a coaxial arrangement about the central discharge rod (55).

2. The air filtering device according to claim 1 characterised in that there is a plurality of cylindrically shaped plates (51, 52, 53) which are spaced apart and of differing diameters to allow flow of air between the plates.

3. The air filtering device according to Claim 2 characterised in that three cylindrical plates (51, 52, 53) are mounted coaxially about the centrally positioned discharge rod (55), the discharge rod (55) and second cylinder (52) being charged at a first polarity and the first cylinder (51) and third cylinder (53) being charged at the opposite polarity.

4. The air filtering device according to Claim 3 characterised in that the electrical potential between each adjacent cylinder (51, 52, 53) and between the rod (55) and its adjacent cylinder (51) is approximately 4kV (DC) respectively.

5. The air filtering device according to any one of the preceding claims characterised in that the rod (55) and each cylinder (51, 52, 53) is constructed of stainless steel or other conducting material.

6. The air filtering device according to any one of the preceding claims characterised in that the electrostatic precipitator (50) is mounted as the air outlet (16) of a cyclone (10).

7. An air filtering device comprising a frusto-conical cyclone chamber (11) having a large end (14) and a small end, an in-feed (20) positioned adjacent the large end (14) to promote tangential in feed of unfiltered air, a collector (13) being positioned at the small end and an air outlet (16) being positioned at the large end (14) of the cyclone (10) characterised in that the air outlet (16) includes an electrostatic precipitator (50) through which the air passes to exit.

8. The air filtering device according to Claim 7 characterised in that the electrostatic precipitator (50) is in accordance with any one of Claims 1 to 6.

9. The air filtering device according to either Claim 7 or Claim 8 wherein the collector is removable to facilitate cleaning.

10. A method of filtering air comprising tangentially feeding unfiltered air into a cyclone (10), collecting larger particles at the base (13) of the cyclone, and allowing the air to leave the cyclone through an air outlet (16) characterised by electrically charging at least one plate in the air outlet (16) to collect smaller particles as the air leaves the cyclone.

11. A method of filtering air according to claim 10 characterised in that there is a plurality of plates.
